**Europäisches Patentamt**

(19) **European Patent Office**

**Office européen des brevets**

(11) Numéro de publication: **0 106 773**
**B1**

(12) **FASCICULE DE BREVET EUROPEEN**

(45) Date de publication du fascicule du brevet:
03.06.87

(21) Numéro de dépôt: 83420157.6

(22) Date de dépôt: 29.09.83

(51) Int. Cl.⁴: **G 03 B 27/32, G 03 B 27/58**

**E R R A T U M**

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT:<br>SHOULD READ :<br>DEVRAIT ETRE LU : |
|---|---|---|---|---|
| le passe-vues (47) | 4 | 6 | 47 | le passe vues (4) |
| sur la bati | 5 | 7 | 61 | sur le bati |
| Steckerstifte (67) | 6 | 9 | 13 | Stéckerstifte (57) |
| Steckerbuchsen (68) | | | 17 | Steckerbuchsen (58) |

| Tag der Entscheidung<br>über die Berichtigung )<br>Date of decision on ) 15.01.88<br>rectification: ).....................<br>Date de décision portant )<br>sur modification: ) | Ausgabe- und Ver-<br>öffentlichungstag: )<br>Issue and publication ) 09.03.88<br>date: ).....................<br>Date d'edition et de )<br>publication: ) | Patbl.Nr)<br>EPB no:).........  88/10<br>Bull. no:) |
|---|---|---|

**Europäisches Patentamt**

**European Patent Office**

**Office européen des brevets**

(19)

(11) Numéro de publication: **0 106 773**
**B1**

# FASCICULE DE BREVET EUROPEEN

(12)

(45) Date de publication du fascicule du brevet:
**03.06.87**

(51) Int. Cl.⁴: **G 03 B 27/32,** G 03 B 27/58

(21) Numéro de dépôt: **83420157.6**

(22) Date de dépôt: **29.09.83**

(54) **Dispositif perfectionné pour le tirage et le développement simultanés de photographies.**

(30) Priorité: **05.10.82 FR 8216841**
**18.03.83 FR 8304698**

(43) Date de publication de la demande:
**25.04.84 Bulletin 84/17**

(45) Mention de la délivrance du brevet:
**03.06.87 Bulletin 87/23**

(84) Etats contractants désignés:
**BE CH DE GB IT LI NL SE**

(56) Documents cités:
**DE - A - 2 050 012**
**GB - A - 2 070 792**
**US - A - 3 308 717**
**US - A - 3 685 150**
**US - A - 3 737 227**

(73) Titulaire: **KIS PHOTO INDUSTRIE, 17 Boulevard Henri IV,**
**F-75004 Paris (FR)**

(72) Inventeur: **Thebault, Claude, 19, avenue du Vercors,**
**F-38240 Meylan (FR)**

(74) Mandataire: **Laurent, Michel et al, 20 rue Louis Chirpaz**
**Boite Postale 32, F-69130 Lyon-Ecully (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un dispositif automatique pour le tirage et le développement simultanés de photographies notamment en couleur.

Dans la demande de brevet européen déposé par la Demanderesse le 8 avril 1982 sous le n° 82.420051 et publié sous le n° 0064015, on a décrit un dispositif automatique intégré de tirage et de développement simultanés, dont la caractéristique essentielle est que les trois ensembles dits «d'exposition A», «en chambre noire B» et «de développement C» sont agencés selon une disposition particulière. L'ensemble en chambre noire B qui comprend un appareil débiteur de papier sensible est malheureusement limité à un seul format, tant en largeur qu'en longueur, sauf pour ce qui concerne seulement la largeur, à changer la cartouche de papier sensible. Cette disposition entraîne une consommation appréciable de papier. Or, on recherche de plus en plus des appareils qui permettent le tirage et le développement simultanés de films photographiques de formats et de qualité divers.

L'invention pallie ces inconvénients.

Elle concerne un dispositif du type en question qui soit simple, économique, fiable, permette de réduire la consommation du papier sensible et surtout puisse s'adapter commodément à des formats de tirage très variés, sans avoir à changer la cartouche d'alimentation en papier sensible.

L'invention concerne un dispositif automatique intégré perfectionné pour le tirage et le développement simultanés de photographies, notamment en couleur, du type comprenant trois ensembles principaux, à savoir:

— un premier ensemble A, dit d'exposition, comprenant une lampe d'exposition, un système filtrant, un ensemble optique formé par un passe-vues et un objectif;

— un deuxième ensemble B comprenant, en chambre noir, un organe d'alimentation en papier sensible et un organe débiteur d'une longueur déterminée de papier, constitué par deux rouleaux parallèles et débrayables maintenus en pression, l'un moteur, l'autre presseur, une cisaille, destinée à couper cette longueur de papier prédéterminée, formée d'un couteau fixe et d'un couteau mobile disposés dans le même plan horizontal;

— un troisième ensemble C, de développement, comprenant des bacs de traitement et des moyens destinés à faire avancer la feuille insolée découpée dans ces différents bacs.

Ce dispositif perfectionné se caractérise:

— en ce que la partie coupante du couteau fixe délimite sur le papier sensible la partie insolée par le faisceau lumineux issu de l'objectif et est disposé juste en-dessous et à l'aplomb du plan de tangence des deux rouleaux débiteurs;

— et en ce que le fond de l'organe débiteur présente une fente obturée de manière étanche à la lumière par le couteau mobile qui recouvre le couteau fixe.

Avantageusement, en pratique:

— l'ensemble optique présente également des moyens de réglage du temps d'exposition, comprenant un connecteur électrique multi-broches dans lequel:

les broches mâles, placées sur l'ensemble optique sont reliées respectivement à la lampe d'exposition, au moteur d'avance du film à tirer, à une cellule de mesure de la quantité de lumière et à un organe d'ajustage du temps de pose;

les broches femelles, placées en regard desdites broches mâles, mais sur le bâti de la chambre noire B, sont reliées à une carte électronique placée dans cet ensemble B portant les connections électriques et les éléments de commande des différents moteurs;

— cet ensemble optique présente des moyens de réglage de la longueur du papier à débiter comprenant un connecteur électrique multi-broches dans lequel:

les broches mâles sont placées sur le bas du débiteur et sont reliées à la carte électronique placée sur le bâti de l'ensemble B;

les broches femelles placées sur le haut du bâti sont reliées respectivement aux moteurs d'entraînement des rouleaux débiteurs et du couteau mobile et à un détecteur de la longueur de papier.

La manière dont l'invention peut être réalisée et les avantages qui en découlent ressortiront mieux de l'exemple de réalisation qui suit, donné à titre indicatif mais non limitatif à l'appui des figures annexées.

La figure 1 représente sommairement un dispositif de tirage et développement simultanés de photographies conforme à l'invention.

La figure 2 est une vue en coupe des ensembles A et B caractéristiques de l'invention.

La figure 3 est une vue en coupe horizontale passant par les axes de rotation des deux rouleaux débiteurs.

La figure 4 est une vue de côté de ces rouleaux débiteurs.

La figure 5 est une vue en coupe horizontale montrant l'organe d'entraînement des couteaux.

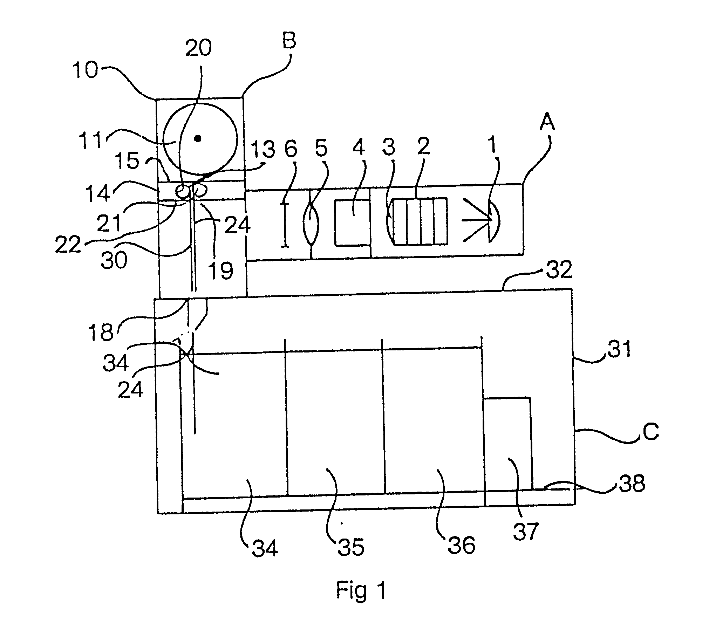

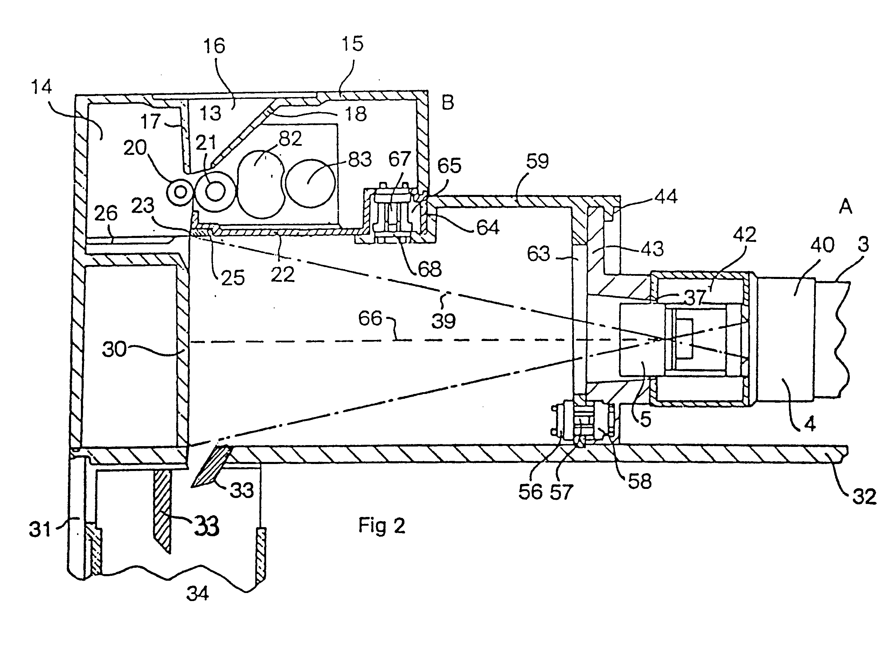

Le dispositif de tirage et de développement montré à la figure 1 et en détail à la figure 2 est analogue à celui qui est décrit dans la demande de brevet européen n° 0064015 rappelé dans le préambule. Ce dispositif comprend essentiellement trois ensembles A, B et C distincts, à savoir respectivement:

un premier ensemble A dit d'exposition comportant:

une lampe d'exposition (1),

un filtre (2),

un diffuseur (3),

un ensemble optique formé par un cadre (4) destiné à recevoir le film à tirer, dénommé également passe-vues et,

un objectif d'agrandissement (5),

un diaphragme obturateur (6);

— un second ensemble B, en chambre noire, perpendiculaire à A comprenant essentiellement deux parties distinctes:

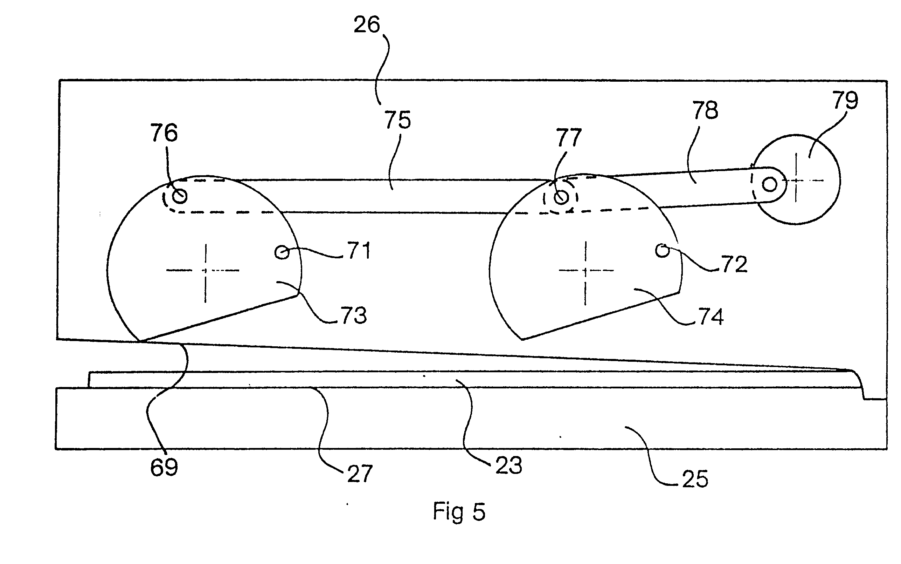

une première partie constituée par une cartouche étanche à la lumière (10) contenant une bobine (11) rotative de papier sensible (12) qui sort de la cartouche (10) à travers une fente (13),

une seconde partie constituée par un boitier (14), en matière plastique ou analogue (zamac), sur le haut duquel (15) repose la cartouche (10); sur cette partie haute (15), est taillée une fente (16) qui coïncide avec la fente (13); cette fente (16) est formée de deux plaques inclinées (17–18) qui guident le papier (12) lorsqu'il pénètre entre les deux rouleaux débiteurs (20) et (21) détaillés aux figures suivantes; le fond (22) de ce boîtier débiteur (14) présente une fente (23) pour le passage du papier débité (24); sur la face inférieure de ce fond (22), est fixé le ciseau (19) constitué par un couteau fixe (25) et par un couteau mobile (26), détaillés à la figure 5; la fente (23) et par conséquent la partie coupante (27) du couteau fixe (25) est située juste en-dessous et à l'aplomb de la ligne de tangence des deux rouleaux débiteurs (20–21); cette fente (23) peut éventuellement être légèrement décalée par rapport à cet aplomb, afin de bien assurer le placage du papier débité (24) sur la plaque d'appui (30);

une plaque verticale d'appui (30) située sous le boitier (16) à l'aplomb de la fente (23) sur lequel s'appuie la feuille de papier débitée (24) pendant l'insolation;

— un troisième ensemble C dit de développement comprenant essentiellement un châssis (31) avec son couvercle (32) dans lequel est ménagé un entonnoir (33) placé sous l'orifice (18); sous cet entonnoir (33), sont placés trois bacs de traitement contenant respectivement l'agent révélateur (34), l'agent de blanchiment-fixage (35) et de lavage (36), puis la section dite de sècherie (37) avec son réceptacle (38) pour recevoir la photo terminée.

La plaque d'appui (30) est fixe.

Il est indispensable que la partie coupante (27) et plus précisément le bord inférieur de ce couteau fixe (25) délimite sur le papier sensible débité (24), en appui sur la plaque (30), la partie qui sera insolée par le faisceau (39) issu de l'ensemble d'exposition A, et plus précisément de l'objectif (5). En d'autres termes, le couteau (25) forme masque pour le faisceau lumineux (39). Cette disposition est très favorable pour obtenir des photographies dont les bords soient nets et pour lesquelles on utilise seulement la surface optimale de papier.

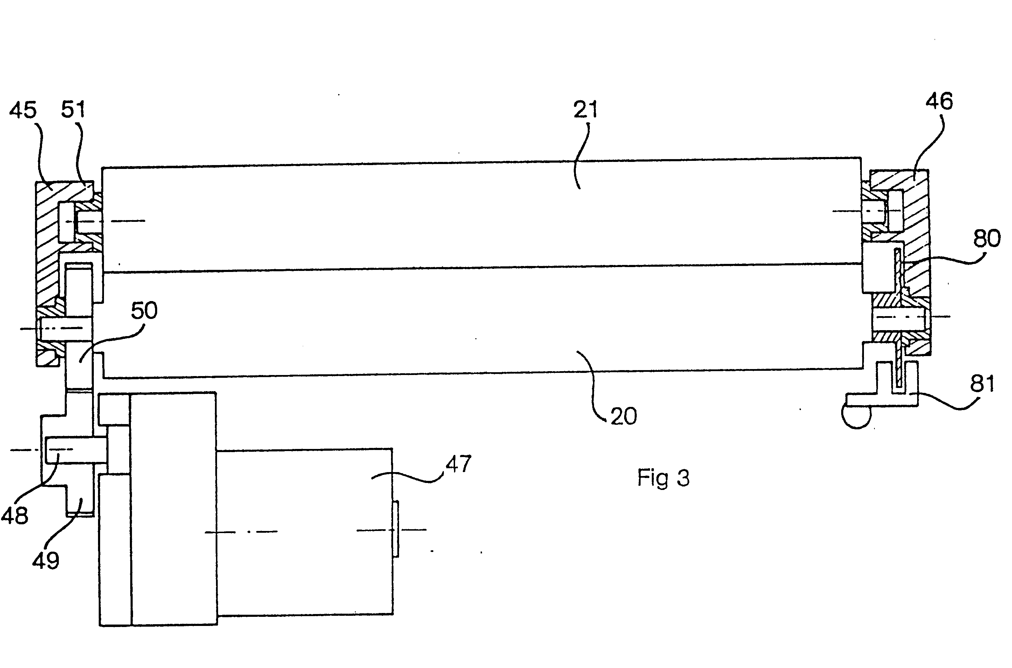

L'organe débiteur (voir figures 3–4) comprend deux flasques (45–46) disposés sur chacune des parois internes du boitier débiteur (14). L'extrémité des rouleaux (20–21) repose sur des paliers ou coussinets. Un motoréducteur (47) entraîne par un arbre de sortie (48) un pignon (49) qui est en prise sur un pignon (50) porté par le rouleau moteur (20). Le rouleau presseur débrayable (21) est monté fou à l'extrémité d'une bielle (51) articulée à son autre extrémité (52) sur le flasque (45). Un ressort de rappel (53) est fixé à une extrémité (54) sur le flasque (45) et à son autre extrémité (55) sur la bielle (51), de manière à maintenir le rouleau mené (21) en pression contre (20).

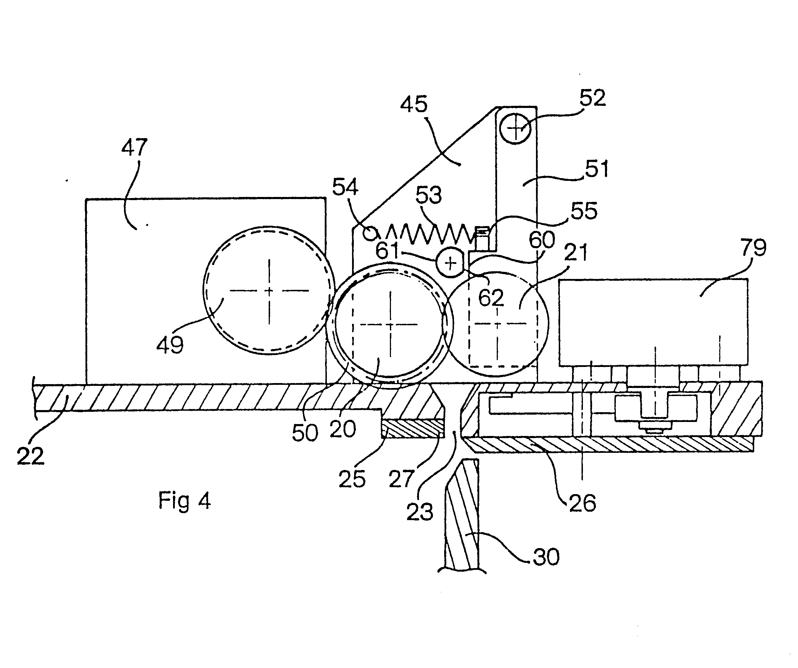

Pour introduire la feuille (12) (voir figure 4), la bielle (51) présente côté intérieur une rampe (60) en forme de came destinée à coopérer avec un arbre (61) parallèle aux deux rouleaux (20) et (21). Cet arbre (61) présente en regard de la rampe (60) une entaille (62) destinée à coopérer avec la rampe (60). En tournant l'arbre (61), l'entaille (62) appuie sur la rampe (60) ce qui écarte la bielle (51). En écartant ainsi les rouleaux, on peut donc introduire le papier sensible (12).

Le ciseau (voir figure 5) fonctionne de la manière suivante. Le couteau fixe (25) est vissé sur le fond (22) du boîtier (14) au voisinage immédiat de la fente (23). Le couteau mobile (26) dont le fil de coupe (69) est incliné ou présente une forme de V très ouverte est formé par une plaque solidaire par deux axes (71) et (72) de deux plateaux oscillants (73) et (74) horizontaux connectés entre eux par une bielle (75) prenant appui sur des axes fixes, mais articulés (76–77). Cette bielle (75) est entraînée en mouvement par une autre bielle (78) appuyée également en (77) connectée à l'axe de commande d'un motoréducteur (79). On obtient ainsi un mouvement de rapprochement progressif du fil (69) du couteau mobile (26) vers la partie coupante (27) du couteau fixe (25). Comme déjà dit, la face (27) est avantageusement située à l'aplomb de la ligne de tangence des deux rouleaux (20–21).

Au repos, le couteau mobile (26) recouvre entièrement le couteau fixe (25), de manière à assurer l'étanchéité.

Pour déterminer la longueur de papier débité (voir figure 3), l'extrémité libre du rouleau moteur (20) porte un disque segmenté (80) coopérant de manière connue avec un lecteur opto-électronique (81).

Les deux moteurs motoréducteurs (47) et (79) sont commandés en synchronisme par un organe classique approprié non représenté.

Comme déjà dit (voir figure 2), l'ensemble optique A comprend essentiellement le passe-vues (4) et l'objectif (5). Le passe-vues est du type décrit dans la demande de brevet européen 0064015 cité dans le préambule. Ce passe-vues comporte essentiellement un réceptacle (40) pour l'ensemble filtrant (2–3) et un passage chanfreiné pour le film à tirer.

Le réceptacle (40) est associé à un autre boîtier (42) à l'extrémité duquel est disposé l'objectif (5). Une cellule photo-électrique (37), par exemple du type CdS, est associée à un posemètre pour permettre de mesurer la quantité de lumière passant à travers le film et ce afin de corriger le temps de pose des films sur ou sous exposés.

Cet ensemble optique A est monté sur un panneau rigide (43) en matière plastique. Ce panneau (43) est encliqueté sur la face avant d'entrée (44) du bâti. Ce panneau (43) comporte à sa base un connecteur électrique multibroches (56) par exemple du type à vingt broches, réf. STAF de HARTING ELEKTONIK GmbH.

Les broches mâles (57) du contacteur (56) sont fixées sur la plaque (43) alors que les broches femelles (58) sont fixées sur le bâti (59) de l'ensemble en chambre noire B̲. Une fenêtre (63) est ménagée dans le bâti (59) sur la face d'entrée afin de laisser passer le faisceau lumineux (39) issu de l'objectif (5).

Le bâti (59) et le porte ensemble (43) sont en matière plastique moulée. La face supérieure du bâti (59) comporte une seconde ouverture (64) destinée à recevoir un contacteur électrique 65) analogue à (56). Une plaquette électronique de commande, encliquetée dans le bâti de B̲ porte les différents circuits de connection électrique et les éléments de commande, tels que les relais, composants électroniques, etc... Cette plaquette non représentée est reliée à la source électrique.

La fenêtre (63) doit être suffisamment grande pour admettre les différents types d'ensemble optique (4–5). Ainsi, si on désire obtenir un petit format, l'objectif (5) sera alors placé en haut de la fenêtre (63), alors qu'en revanche, si on désire réaliser un plus grand format, il sera plutôt placé vers le bas.

Ainsi, par construction, la distance entre l'axe optique (66) et l'axe de coupe du papier qui est délimité par le couteau fixe (25) et plus précisément (27) sur lequel se projette l'image à reproduire, est égale à la moitié de la longueur à débiter, ce qui évite ainsi tout règlage et diminue par voie de conséquence les sources d'erreurs.

L'ensemble optique (4–5) porte sur le corps (42) des moyens d'identification, tels que par exemple le format du film destiné à être tiré et le format de tirage.

Le contacteur électrique (56) est relié par ses broches mâles (57) respectivement: à la lampe d'exposition (1), au moteur d'avance du film à tirer, et à la cellule de mesure (37) de la quantité de lumière. Les autres broches mâles (57) servent à l'identification de l'ensemble optique. Pour ce faire, lorsque l'ensemble est mis en place, si le courant passe dans une broche déterminée, cela signifie que c'est bien le passe-vues approprié pour tel format et pour telle pellicule qui est en place. Sinon, le courant électrique ne passerait pas.

Parallèlement, les broches femelles (58) sont reliées à la plaquette électronique de commande.

Pour réduire le nombre de broches, les informations données par ces broches sont codées en système binaire. Ainsi, pour un connecteur (70) comportant vingt broches, on aura:

deux broches pour l'alimentation électrique, par exemple en douze volts,
huit broches serviront à la programmation d'avance du papier (12); comme cette programmation est effectuée en binaire, on pourra ainsi avoir des avances de millimètre en millimètre;

deux broches serviront à commander l'avance du moteur d'entraînement du film;
une broche servira à détecter la présence du passe-vues (4), ce qui permet de faire des essais à vide;
deux broches serviront à l'alimentation de la lampe de projection (1);
deux broches serviront à la cellule (37) de mesure de la quantité de lumière;
deux broches serviront au potentiomètre d'ajustage du temps de pose.

Le connecteur électrique (65) placé dans l'ouverture (64) du bâti de l'ensemble en chambre noire B̲ comporte également vingt broches mâles (67), à savoir respectivement:

deux broches pour l'alimentation électrique;
une broche pour le moteur (82) d'entraînement du papier et plus précisément des débiteurs (20–21);
une broche pour la commande du moteur (83) de la cisaille (26) (voir figure 2);
deux broches pour la commande des micro-rupteurs de la cisaille fermée;
une broche pour le micro-rupteur de fin de cycle;
deux broches pour le détecteur photo-électrique de la longueur de papier.

Les broches femelles (68) de ce connecteur électrique (65) sont également reliées à la plaque électronique de commande.

Le dispositif de tirage et développement simultanés selon l'invention se caractérise donc par des ensembles optiques: passe-vues (4) – objectif (5), associés à des connecteurs électriques (56–57–58), ces ensembles optiques présentant des moyens d'identification et des moyens (56–67) qui coopèrent avec les moyens de règlage:

de la longueur de papier à débiter,
du temps d'exposition.

Les principales étapes de fonctionnement sont donc: la mise en place de l'ensemble en chambre noire (11–14) sur la chambre horizontale (31);
le recul du couteau mobile (26);
le débit d'une longueur appropriée de papier (24) par le débiteur (20–21), selon le codage prévu par le passe-vues (47);
l'exposition-insolation du papier (24) en appui sur la plaque (30), jusqu'à ce que la cellule (37) située vers l'objectif (5) ait reçu la quantité de lumière nécessaire pour un tirage correct;
la coupe de la partie insolée par le ciseau (25–26), le papier coupé insolé (24) tombant par l'ouverture (18) dans l'ensemble de développement C̲.

Eventuellement, le moteur d'avance du film présente la vue suivante et le cycle recommence.

Ainsi, par un choix approprié de l'ensemble optique (4–5) associé aux connecteurs électriques (56–65) coopérant avec la plaque électronique, l'opérateur pourra tirer des films ou des pellicules de formats spéciaux et ce, sans avoir à utiliser un matériel différent, mais simplement en jouant sur le choix de l'ensemble optique (4–5).

Cette solution présente donc une économie certaine au niveau de la fabrication de ce matériel, puisque selon les formats désirés par l'acheteur, il suffira seulement de modifier l'ensemble optique. En outre, il s'agit également d'un dispositif de sécurité pour l'opérateur.

Ainsi, ce dispositif permet de traiter des formats très variés. Il est en outre d'une construction simple et d'exploitation facile. Ce dispositif est fiable, compact et peut indifféremment traiter des photos en noir et blanc ou en couleur.

**Revendications**

1. Dispositif automatique intégré perfectionné pour le tirage et le développement simultanés de photographies, notamment en couleur, du type comprenant essentiellement trois ensembles principaux, à savoir respectivement:
un premier ensemble A d'exposition comprenant une lampe (1), un système filtrant (2), un ensemble optique formé par un passe-vues (4) et un objectif (5);
un deuxième ensemble B comprenant en chambre noire un organe d'alimentation (10) en papier sensible (12) et un organe débiteur (14) d'une longueur déterminée de papier (24) constitué par deux rouleaux parallèles et débrayables (20, 21) maintenus en pression, l'un moteur (20), l'autre presseur (21), et une cisaille (25, 26) destinée à couper cette longueur prédéterminée (24), formée d'un couteau fixe (25) et d'un couteau mobile (26) disposés dans le même plan horizontal;
un troisième ensemble C de développement comprenant des bacs de traitement (34–37) et des moyens destinés à faire avancer la feuille insolée découpée dans ces différents bacs (34–37);
caractérisé:
en ce que la partie coupante (27) du couteau fixe (25) délimite sur le papier sensible (24) la partie insolée par le faisceau lumineux (39) issu de l'objectif (5) et est disposée juste en dessous et à l'aplomb du plan de tangence des deux rouleaux débiteurs (20, 21);
et en ce que le fond (22) de l'organe débiteur (14) présente une fente (23) obturée de manière étanche par le couteau mobile (26) qui recouvre le couteau fixe (25).

2. Dispositif selon la revendication 1, caractérisé en ce que l'ensemble optique (4, 5) présente également des moyens de réglage (37) du temps d'exposition, comprenant un connecteur électrique (56) multi-broches dans lequel:
les broches mâles (57), placées sur l'ensemble optique (42, 43) sont reliées respectivement à la lampe d'exposition (1), au moteur d'avance du film à tirer, à une cellule (37) de mesure de la quantité de lumière et à un organe d'ajustage du temps de pose;
les broches femelles (58), placées en regard desdites broches mâles (57), mais sur la bâti (59) de la chambre noire B, sont reliées à une carte électronique placée dans cet ensemble B portant les connections électriques et les éléments de commande des différents moteurs.

3. Dispositif selon les revendications 1 et 2, caractérisé en ce que l'ensemble optique (4, 5) présente des moyens de réglage de la longueur du papier à débiter comprenant un connecteur électrique multi-broches (65) dans lequel:
les broches mâles (57) sont placées sur le bas du débiteur (14) et sont reliées à la carte électronique placée dans le bâti (59) de l'ensemble B;
les broches femelles (58) placées sur le haut du bâti (59) sont reliées respectivement aux moteurs d'entraînement (82, 83) des rouleaux débiteurs (20, 21) et du couteau mobile (26) et à un détecteur de la longueur de papier.

**Patentansprüche**

1. Integrierte und verbesserte Vorrichtung zum gleichzeitigen Vergrössern und Entwickeln von Photographien, insbesondere in Farbe, bestehend aus im wesentlichen drei Hauptgruppen, nämlich:
einer ersten Gruppe A zur Belichtung, die eine Lampe (1), ein Filtersystem (2) und eine optische Einrichtung, die von einer Bildführung (4) und einem Objektiv (5) gebildet wird, umfasst;
einer zweiten Gruppe B, die in einem Dunkelraum eine Zuführeinrichtung (10) für lichtempfindliches Papier (12) und eine Liefereinrichtung (14) für einen Papierabschnitt (24) bestimmter Länge umfasst, welche Liefereinrichtung zwei parallele und abschaltbare, unter Druck stehende Rollen (20, 21), nämlich eine Antriebsrolle (20) und eine Druckrolle (21), sowie eine Schere (25, 26) zum Abschneiden des Papierabschnittes (24) mit einem festen Messer (25) und einem beweglichen Messer (26) aufweist, welche Messer in der gleichen Horizontalebene angeordnet sind,
einer dritten Gruppe C zur Entwicklung, die Behandlungsbäder (34 bis 37) und Mittel zum Transport der einzelnen belichteten Blätter durch die verschiedenen Bäder (34 bis 37) umfasst; dadurch gekennzeichnet, dass die Schneide (27) des festen Messers (25) auf dem lichtempfindlichen Papier den Abschnitt (24) begrenzt, der von dem vom Objektiv (5) ausgehenden Lichtbündel (39) belichtet wird, und unmittelbar unterhalb der beiden Zuführrollen (20, 21) und senkrecht zu deren gemeinsamer Tangentialebene angeordnet ist;
und dass der Boden (22) der Liefereinrichtung (14) einen Schlitz (23) aufweist, der von dem beweglichen Messer (26) dicht verschlossen wird, das das feste Messer (25) überdeckt.

2. Vorrichtung nach Anspruch 1, dadurch gekennzeichnet, dass die optische Einrichtung (4, 5) auch Mittel (37) zum Einstellen der Belichtungszeit aufweist, die einen mehrpoligen elektrischen Stecker (56) umfassen,
dessen Steckerstifte (57), die an der optischen Einrichtung (42, 43) angebracht sind, mit der Belichtungs-Lampe (1), einem Motor zum Transport des zu vergrössernden Films einer Zelle (37) zur Messung der Lichtmenge und einem Organ zur Einstellung der Belichtungszeit verbunden sind;

dessen Steckerbuchsen (58), die den Steckerstiften (57) gegenüberstehen, aber auf dem Gehäuse (59) des Dunkelraumes B angebracht sind, mit einer elektronischen Karte verbunden sind, die in der Einheit B angeordnet ist und die die elektrischen Verbindungen und die Elemente zur Steuerung der verschiedenen Motoren trägt.

3. Vorrichtung nach den Ansprüchen 1 und 2, dadurch gekennzeichnet, dass die optische Einrichtung (4, 5) Mittel zum Regeln der Länge des zuzuführenden Papiers aufweist, die einen mehrpoligen elektrischen Stecker (65) umfassen, dessen Steckerstifte (67) an der Unterseite der Liefereinrichtung (14) angeordnet und mit einer im Gehäuse (59) der Einheit B angeordneten elektronischen Karte verbunden sind; dessen Steckerbuchsen (68) an der Oberseite des Gehäuses (59) angeordnet und mit den Antriebsmotoren (82, 83) für die Förderrollen (20, 21) und für das bewegliche Messer (26) und mit einem Papierlängen-Detektor verbunden sind.

**Claims**

1. An improved integrated automatic device for simultaneously printing and developing photographs, namely coloured ones, mainly comprising three principal units, i.e. respectively:
a first exposure unit A comprising a lamp (1), a filtering assembly (2), an optical assembly constituted of a frame (4) and a lens (5);
a second unit B in dark room comprising a feeding device (10) of light sensitive photographic paper (12) and a delivering member (14) of a predetermined length of said paper (24) constituted of two disengageable parallel delivery rollers (20, 21), maintained under pressure, one driving (20), the other pressing (21), and a cutter (25, 26) for cutting this predetermined length of paper (24), said cutter having a fixed knife (25) and a mobile knife (26) disposed in the same plane;
a third developing unit C comprising treatment vats (34–37) and means adapted for advancing a cut exposed sheet of paper through the different vats;
wherein:
the cutting part (27) of the fixed knife (25) defines on the sensitive paper (24) a part thereof to be exposed by light beam (29) issued from lens (5), and is disposed just below and substantially plumb with the plane of tangency of the two delivery rollers (20, 21);
and the bottom (22) of the delivering member (14) presents a slot (23) sealed in a light tight fashion by said mobile knife (26), which is then covering said fixed knife (26).

2. The device of claim 1 wherein the optical assembly (4, 5) further comprises means (37) for adjusting exposure time, comprising a multipoint electrical connector (56) in which:
male pins (57), disposed on the optical assembly (42, 43) are respectively connected to the exposure lamp (1), to a motor advancing film to be printed, to a photocell (37) for metering the quantity of light and to a member for adjusting the exposure time;
female pins (58), disposed opposite said male pins (57), but fixed on the frame (59) of the dark room unit B, are connected to an electronic board disposed in this unit B, having electrical connections and elements controlling the various motors.

3. The device of claims 1 and 2, wherein the optical assembly (4, 5) comprises means for adjusting the predetermined length of paper to be delivered, comprising a multipoint electrical connector (65), in which:
male pins (57) are disposed on the bottom of the delivering member (14) and are connected to the electronic board disposed on the frame (59) of the unit B;
female pins (58), disposed on the top of the frame (59), are respectively connected to motors (82, 83) for driving the delivery rollers (20, 21) and the mobile knife (26), and to a detector for determining the length of paper.

Fig 1

Fig 2

Fig 3

Fig 4

Fig 5